(19) **Europäisches Patentamt / European Patent Office / Office européen des brevets**

(11) **EP 3 711 203 B1**

(12) **FASCICULE DE BREVET EUROPEEN**

(45) Date de publication et mention
de la délivrance du brevet:
**05.01.2022 Bulletin 2022/01**

(21) Numéro de dépôt: **18804267.5**

(22) Date de dépôt: **14.11.2018**

(51) Int Cl.:
*H04J 3/06* (2006.01)   *G06F 1/14* (2006.01)
*H04L 12/40* (2006.01)

(86) Numéro de dépôt international:
**PCT/EP2018/081178**

(87) Numéro de publication internationale:
**WO 2019/096816 (23.05.2019 Gazette 2019/21)**

(54) **SYSTÈME ET PROCÉDÉ DE DATATION D'UN ÉVÉNEMENT DÉTECTÉ DANS UN VÉHICULE AUTOMOBILE**

SYSTEM UND VERFAHREN ZUM DATIEREN EINES IN EINEM KRAFTFAHRZEUG ERFASSTEN EREIGNISSES

SYSTEM AND METHOD FOR DATE-STAMPING AN EVENT DETECTED IN AN AUTOMOTIVE VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.11.2017 FR 1760872**

(43) Date de publication de la demande:
**23.09.2020 Bulletin 2020/39**

(73) Titulaire: **Renault S.A.S.
92100 Boulogne-Billancourt (FR)**

(72) Inventeur: **COAT, Denis
78580 Les Alluets Le Roi (FR)**

(56) Documents cités:
**WO-A1-2005/107174    US-B2- 8 775 681
US-B2- 9 756 590**

Printed by Jouve, 75001 PARIS (FR)

**Description**

La présente invention concerne le domaine de la datation d'un événement, notamment dans les systèmes de commande de véhicules automobiles.

De nos jours, le nombre de capteurs à bord des véhicules automobile augmente, dû à la nécessité des données indispensables pour les systèmes d'aide à la conduite de plus en plus nombreux. Il est primordial de récupérer en temps réel les informations provenant des différents capteurs, ainsi que de s'assurer de la cohérence des informations fournies. Une datation précise des évènements est donc particulièrement importante.

Regrouper plusieurs informations provenant de différents capteurs non synchrones peut entraîner des erreurs sur la nature d'un événement. Ainsi, une erreur, même infime, sur le temps attribué à un évènement donné peut engendrer une confusion préjudiciable sur la performance des systèmes embarqués dans les véhicules automobiles, notamment les systèmes d'aide à la conduite, et plus particulièrement dans les véhicules à conduite autonome.

Le document WO2005/107174 -A1 propose un système configuré pour mettre en corrélation le temps dans différentes bases de temps utilisées par des unités reliées entre elles afin de dater un évènement de référence par rapport à une première base de temps. Toutefois, bien que le système vise à contrôler les écarts de temps des différents périphériques connectés, il ne propose aucune synchronisation entre les périphériques. De plus, un tel système repose sur l'utilisation de plusieurs bases de temps.

Le document DE 10 2015 212218 - A1 décrit un système multi-capteurs comprenant une pluralité d'unités de détection régies chacune par son horloge interne. Le système comprend une unité de calcul configurée pour réguler et synchroniser les différents capteurs au moyen d'un signal de synchronisation sur le réseau, ce qui surcharge le réseau de communication.

Le document US 9756590 A1 décrit un système FlexRay pour synchroniser des capteurs dans un véhicule automobile.

L'objectif de l'invention est donc de pallier ces inconvénients et de proposer un système et un procédé permettant une datation précise et fiable d'événements dans un véhicule automobile afin de combiner les informations provenant de différents capteurs et de s'affranchir au maximum des erreurs sur la nature d'un événement.

L'invention a pour objet un système de datation d'un événement se produisant dans un véhicule automobile, comprenant une pluralité de capteurs comprenant chacun une horloge interne relative, et une unité électronique de commande comprenant une horloge interne absolue indépendante des horloges internes relatives et configurée pour communiquer avec chacun des capteurs via un réseau de communication.

Le temps relatif mesuré par l'horloge interne relative du capteur d'un événement donné est appelé temps relatif capteur et le temps mesuré par une horloge de référence associée au capteur d'un événement donné est appelé temps relatif de référence. L'unité électronique de commande peut être, par exemple, un calculateur d'aide à la conduite, connu de l'homme du métier sous l'acronyme anglo-saxon « ADAS ». Le réseau de communication peut être, par exemple, un réseau bien connu de l'homme du métier sous l'acronyme anglo-saxon « CAN : Controller Area Network ». En variante, on pourrait prévoir tout réseau de communication, par exemple de type Ethernet, Flex ray, etc...

L'horloge interne absolue de l'unité électronique de commande est considérée comme l'horloge de référence absolue. Le temps de l'horloge de référence absolue est appelé temps absolu. L'horloge de référence associée au capteur, de préférence hébergée par l'unité électronique de commande, est synchrone à l'horloge interne absolue.

Par « événement », on entend tout signal détecté par un capteur, tel que par exemple, une caméra, un radar ou tout autre moyen capable de détecter un objet ou une cible.

L'unité électronique de commande comprend un module de traitement des données configuré pour recevoir en entrée, à chaque événement détecté par le capteur, un temps relatif provenant de l'horloge relative du capteur associé à l'événement détecté ; un module de remise à zéro configuré pour transmettre, à chaque période, un signal de remise à zéro de l'ensemble des horloges internes relatives, via des trames de communication du réseau de communication ; et un module de calcul configuré pour calculer un temps absolu capteur en fonction du temps relatif capteur reçu par le module de traitement et d'un temps de remise à zéro mémorisé par un module de mémorisation dans l'unité de commande électronique à chaque remise à zéro, permettant de définir un temps relatif de référence.

Ainsi, la remise à zéro de toutes les horloges relatives en utilisant des trames périodiques de communication déjà existantes sur le réseau de communication permet de s'affranchir d'une charge de réseau supplémentaire et de réduire les pertes de temps liées à une préparation de trame de synchronisation absolue qui doit ensuite être décodée, comme c'est le cas dans l'art antérieur.

Selon la présente invention, la réception d'un signal de remise à zéro par des trames de communication réinitialise simplement le compteur local de chacune des horloges relatives.

Avantageusement, le module de calcul du temps absolu capteur comprend un module configuré pour comparer le temps relatif de l'horloge interne d'un capteur associé à l'événement détecté avec le temps relatif de référence de l'horloge interne de l'unité de commande électronique.

Par exemple, lorsque le temps relatif capteur est inférieur au temps relatif de référence, le module de calcul est configuré pour calculer le temps absolu capteur en additionnant le temps relatif capteur au temps de remise à zéro mémorisé par le module de mémorisation moins un temps de traitement prédéterminé.

Selon un autre exemple, lorsque le temps relatif capteur est supérieur au temps relatif de référence, le module de calcul comprend un module de comparaison configuré pour comparer ledit temps relatif capteur avec la période de remise à zéro, lorsque le temps relatif capteur est supérieur à la période de remise à zéro, le module de calcul est configuré pour calculer le temps absolu capteur en additionnant le temps relatif capteur modulo la période de remise à zéro au temps de remise à zéro.

Lorsque le temps relatif capteur est inférieur à la période de remise à zéro, le module de calcul est configuré pour calculer le temps absolu capteur en additionnant le temps relatif capteur au temps de remise à zéro sur le créneau précédent mémorisé par le module de mémorisation.

Par exemple, la période de remise à zéro est inférieure à 10 secondes, par exemple comprise entre 50ms et 1 seconde, par exemple comprise entre 50ms et 500ms, par exemple égale à 100ms.

Selon un mode particulier de réalisation, l'unité électronique de commande comprend un module de vérification de la précision des temps relatifs des capteurs configuré pour déterminer une erreur relative des temps relatifs des capteurs, ledit module de vérification étant configuré pour mémoriser chaque temps relatif capteur avant la mise à zéro, calculer la différence entre deux temps relatifs capteurs entre deux remises à zéro successives, comparer ladite différence avec une différence de temps absolu de l'horloge interne de l'unité de commande électronique entre deux temps absolus entre deux remises à zéro successives correspondant respectivement aux deux temps relatifs capteur, et pour calculer une erreur relative correspondant à la différence entre la différence entre deux temps relatifs capteurs et la différence de temps absolu.

On peut ainsi corriger le temps relatif capteur pour les événements détectés, estimer un degré de fiabilité ou encore corriger le temps de traitement forfaitaire.

Selon un second aspect, l'invention concerne un procédé de datation d'un événement détecté dans un véhicule automobile comprenant une pluralité de capteurs comprenant chacun une horloge interne relative, et une unité électronique de commande comprenant une horloge interne absolue indépendante des horloges internes relatives et configurée pour communiquer avec chacun des capteurs via un réseau de communication.

Le temps relatif de l'horloge du capteur d'un événement donné est appelé temps relatif capteur et les temps de l'horloge de l'unité électronique de commande sont appelés temps relatifs de référence pour l'horloge relative qui subit le même mécanisme que les horloges capteurs, et temps absolu pour l'horloge sans remise à zéro. L'unité électronique de commande peut être, par exemple, un calculateur d'aide à la conduite, connu de l'homme du métier sous l'acronyme anglo-saxon « ADAS ». Le réseau de communication peut être, par exemple, un réseau bien connu de l'homme du métier sous l'acronyme anglo-saxon « CAN : Controller Area Network ». En variante, on pourrait prévoir tout réseau de communication, par exemple de type Ethernet, Flex ray, etc...

L'horloge absolue est considérée comme l'horloge de référence absolue. Le temps de l'horloge de référence est appelé temps absolu.

Par « événement », on entend tout signal détecté par un capteur, tel que par exemple, une caméra, un radar, tout autre moyen capable de détecter un objet ou une cible, ou tout moyen capable de transmettre une information datée.

Selon le procédé, on remet à zéro, à chaque période, l'ensemble des horloges internes relatives des capteurs, via des trames de communication du réseau de communication; on mémorise le temps absolu de remise à zéro de l'horloge absolue de l'unité de commande électronique à chaque remise à zéro ; on détecte un événement, c'est-à-dire tout signal détecté par un capteur, tel que par exemple, une caméra, un radar ou tout autre moyen capable de détecter un objet ou une cible ; on reçoit, à chaque événement détecté, un temps relatif capteur provenant de l'horloge relative du capteur associée à l'événement détecté ; et on calcule un temps absolu capteur en fonction du temps relatif capteur de l'horloge interne d'un capteur associé à l'événement détecté et du temps de remise à zéro mémorisé par un module de mémorisation dans l'unité de commande électronique à chaque remise à zéro, permettant de définir un temps relatif de référence.

Par exemple, la période de remise à zéro est inférieure à 10 secondes, par exemple comprise entre 50ms et 1 seconde, par exemple comprise entre 50ms et 500ms, par exemple égale à 100ms.

Ainsi, la remise à zéro de toutes les horloges relatives en utilisant des trames périodiques de communication déjà existantes sur le réseau de communication permet de s'affranchir d'une charge de réseau supplémentaire et de réduire les pertes de temps liées à une préparation de trame de synchronisation absolue qui doit ensuite être transmise puis décodée, comme c'est le cas dans l'art antérieur.

Selon la présente invention, la réception d'un signal de remise à zéro par des trames de communication réinitialise simplement le compteur local de chacune des horloges relatives.

Avantageusement, lors du calcul du temps absolu capteur, on compare le temps relatif capteur de l'horloge interne d'un capteur associé à l'événement détecté avec le temps relatif de référence de l'horloge interne de l'unité de commande électronique.

Par exemple, lorsque le temps relatif capteur est inférieur au temps relatif de référence, on calcule le temps absolu capteur en additionnant le temps relatif capteur au temps absolu de remise à zéro mémorisé par le module de mémorisation moins un temps de traitement prédéterminé.

Particulièrement, lorsque le temps relatif capteur est supérieur au temps relatif de référence, on compare ledit temps relatif capteur avec la période de remise à zéro, lorsque le temps relatif capteur est supérieur à la période de remise à zéro, on calcule le temps absolu capteur en additionnant le temps relatif capteur modulo la période de remise à zéro au temps absolu de remise à zéro ; et lorsque le temps relatif capteur est inférieur à la période de remise à zéro, on calcule le temps absolu capteur en additionnant le temps relatif capteur au temps absolu de remise à zéro sur le créneau précédent mémorisé par le module de mémorisation.

Particulièrement aussi, on vérifie la précision des temps relatifs des capteurs et pour cela, on mémorise chaque temps relatif capteur avant la mise à zéro, on calcule la différence entre deux temps relatifs capteurs entre deux remises à zéro successives, on compare ladite différence avec une différence de temps absolu de l'horloge interne de l'unité de commande électronique entre deux temps absolus entre deux remises à zéro successives correspondant respectivement aux deux temps relatifs capteur, et on calcule une erreur relative correspondant à la différence entre la différence entre deux temps relatifs capteurs et la différence de temps absolu.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente très schématiquement un système de datation d'un événement selon l'invention dans un véhicule automobile ;
- les figures 2 à 4 représentent graphiquement le temps d'un événement, la période de remise à zéro et le temps de l'horloge absolue selon l'invention ;
- la figure 5 représente un organigramme d'un procédé de datation d'un événement dans un véhicule automobile selon l'invention.

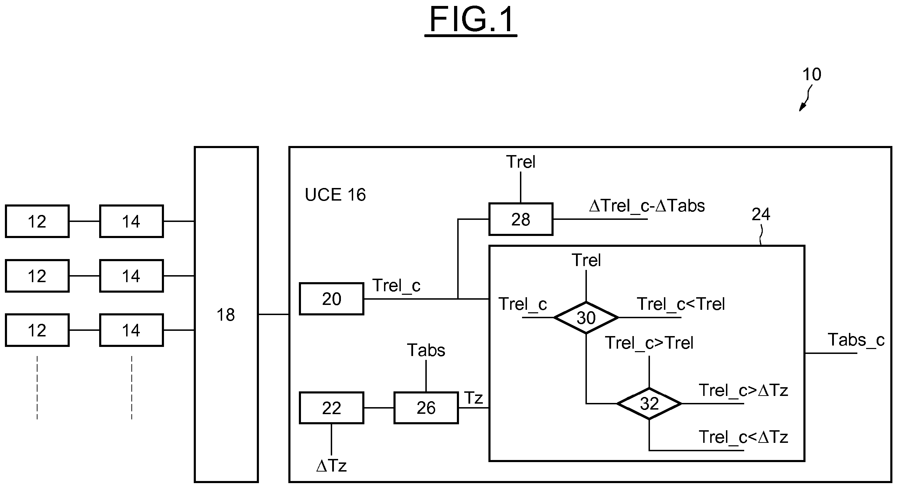

Comme illustré sur la figure 1, un système 10 de datation d'un événement se produisant notamment dans un véhicule automobile, permet de dater de manière fiable et précise les événements.

Par « événement », on entend tout signal détecté par un capteur, tel que par exemple, une caméra, un radar, un lidar, un sonar ou tout autre moyen capable de détecter un objet ou une cible ou de donner tout autre type d'information datée.

Le système de datation 10 comporte une pluralité de capteurs 12 comprenant chacun une horloge interne 14, dite « relative ». Le système de datation comporte aussi une unité électronique de commande ECU 16 configurée pour communiquer avec chacun des capteurs 12 via un réseau de communication 18. Le temps relatif de l'horloge du capteur d'un événement donné est appelé temps relatif capteur $Trel\_c$ et le temps absolu reconstruit à partir du temps relatif capteur d'un événement donné et d'un temps absolu d'une horloge de l'unité électronique de commande est appelé temps absolu capteur $Tabs\_c$.

L'unité électronique de commande 16 peut être, par exemple, un calculateur d'aide à la conduite, connu de l'homme du métier sous l'acronyme anglo-saxon « ADAS : Advanced Driver-Assistance System ».

Le réseau de communication 18 peut être, par exemple, un réseau bien connu de l'homme du métier sous l'acronyme anglo-saxon « CAN : Controller Area Network ». En variante, on pourrait prévoir tout réseau de communication, par exemple de type Ethernet, Flex ray, etc... Plus généralement, l'invention s'applique à tout réseau ou sous-réseau sur lequel une unité électronique de commande émet déjà périodiquement avec une période $\Delta Tz$ une trame pour informer un ou plusieurs équipements électroniques prédéfinis connectés au réseau ou au sous-réseau, d'informations en temps réel, comme, par exemple les portes du véhicule ouvertes ou fermées. Il suffit alors simplement de programmer dans chaque capteur à synchroniser connecté au réseau ou sous réseau, différent ou non d'un équipement électronique prédéfini, une couche basse de lecture sur interruption d'entête de trame, pour détecter la trame périodique préexistante et la considérer comme trame de remise à zéro de son horloge interne relative.

L'unité électronique de commande 16 comprend une horloge interne dite « horloge absolue » (non représentée) indépendante des horloges internes 14 des capteurs 12. L'horloge absolue est considérée comme l'horloge de référence. Le temps de l'horloge absolue de référence est appelé temps absolu $Tabs$.

L'unité électronique de commande 16 comprend un module 20 de traitement des données recevant en entrée, à chaque événement détecté par un capteur, un temps relatif $Trel\_c$ provenant de l'horloge relative 14 du capteur 12 associé à l'événement détecté.

L'unité électronique de commande 16 comprend en outre un module de remise à zéro 22 ou « reset » en termes anglo-saxons configuré pour utiliser une trame de communication existante comme signal de remise à zéro de l'ensemble des horloges internes relatives 14, via des trames périodiques de communication (non représentées) du réseau de communication 18. Par exemple, la période de remise à zéro $\Delta Tz$ est comprise entre 50ms et 200ms, par exemple égale à 100ms. La période de remise à zéro $\Delta Tz$ peut très bien aller jusqu'à une seconde ou au-delà si la dérive des horloges internes relatives est très faible. Un critère de choix de la période de remise à zéro est celui de limiter sa longueur à celle pour laquelle une dérive de l'horloge interne peut provoquer une erreur supérieure à l'unité choisie. Par exemple, si les temps sont exprimés en millisecondes, la dérive en fin de période ne doit pas atteindre la milliseconde. Un autre critère de choix est celui de déterminer une longueur suffisamment élevée de la période pour être supérieure au temps de traitement d'un événement entre sa capture et l'envoi sur le réseau CAN de façon à éviter toute ambiguïté sur le créneau de comptage auquel appartient l'événement.

Ainsi, la remise à zéro de toutes les horloges relatives en utilisant des trames de communication déjà existantes sur le réseau de communication 18 permet de s'affranchir d'une charge de réseau supplémentaire et de réduire les pertes de temps liées à une préparation de trame de synchronisation absolue qui doit ensuite être transmise puis décodée, comme c'est le cas dans l'art antérieur.

Selon la présente invention, la réception d'un signal de remise à zéro par une trame de communication réinitialise simplement le compteur local de chacune des horloges relatives.

L'unité électronique de commande 16 comprend également un module de calcul 24 du temps absolu capteur Tabs_c en fonction du temps relatif Trel_c de l'horloge interne 14 d'un capteur 12 et du temps de remise à zéro Tz mémorisé par un module de mémorisation 26 dans l'unité de commande électronique 16 à chaque remise à zéro. Le temps absolu capteur Tabs_c s'écrit selon l'équation suivante :

$$Tabs\_c = (Trel\_c + Tz) - Tc \qquad \text{(Eq. 1)}$$

Avec,

Tabs_c, le temps absolu associé à un capteur pour un événement donné, exprimé, par exemple, en millisecondes ;
Trel_c, le temps relatif capteur associé à l'horloge interne 14 d'un capteur pour un événement donné/détecté, exprimé, par exemple, en millisecondes ;
Tz, le temps absolu de remise à zéro mémorisé par le module de mémorisation 26 à chaque remise à zéro, exprimé, par exemple, en millisecondes ; et
Tc, le temps de calcul et/ou de traitement nécessaire pour transmettre le temps relatif au module de calcul 24, exprimé, par exemple, en millisecondes. Le temps de calcul Tc est, par exemple, sous la forme d'un temps prédéterminé à appliquer.

Tel qu'illustré sur la figure 1, l'unité électronique de commande 16 comprend un module 28 de vérification de la précision des temps relatifs des capteurs Trel_c afin d'estimer une erreur relative sur un créneau de mesure. A cet effet, le module 28 de vérification est configuré pour recevoir, d'un capteur, chaque temps relatif Trel_c, mesuré par ce dernier et renvoyé à l'unité électronique avant la remise à zéro pour en calculer la différence ∆Trel_c entre deux temps relatifs Trel_c1 et Trel_c2 de remises à zéro successives. Le module 28 de vérification est configuré pour comparer ladite différence ∆Trel_c avec une différence de temps absolu ∆Tabs de l'horloge interne de l'UCE 16 entre deux temps absolu Tabs1 et Tabs2 qui correspondent aux mêmes remises à zéro que Trel_c1 et Trel_c2.:

$$\Delta Trel\_c = Trel\_c1 - Trel\_c2 \qquad \text{(Eq. 2)}$$

$$\Delta Tabs = Tabs1 - Tabs2 \qquad \text{(Eq. 3)}$$

La comparaison de ces deux différences permet de détecter un éventuel écart, et d'adapter, ou non, les dates reçues pour les prochaines réceptions (simple homothétie).

Corrections plus haut pour tenir compte des remarques ci-dessous :
Le premier temps absolu Tabs1 correspond au temps absolu de réception par l'UCE de la trame contenant la valeur Trel_c1, et le deuxième temps absolu Tabs2 correspond au temps absolu de réception par l'UCE de la trame contenant la valeur Trel_c2.

L'UCE est configurée pour détecter tout reset/remise à zéro manqué d'un capteur et inhibera alors ce calcul, ou avantageusement, prendra la date précédente de reset qui correspondra.

Le module 28 de vérification calcule une erreur relative E correspondant à la différence entre ∆Trel_c et ∆Tabs et peut ainsi corriger le temps relatif capteur Trel_c pour les événements détectés, estimer un degré de fiabilité ou encore corriger le temps de traitement Tc forfaitaire.

Le module de calcul 24 du temps absolu capteur Tabs_c comprend un module 30 configuré pour comparer le temps relatif capteur Trel_c de l'horloge interne d'un capteur associé à un événement donné avec le temps relatif de référence Trel, dérivé du temps absolu Tabs de l'horloge interne de l'UCE 16.

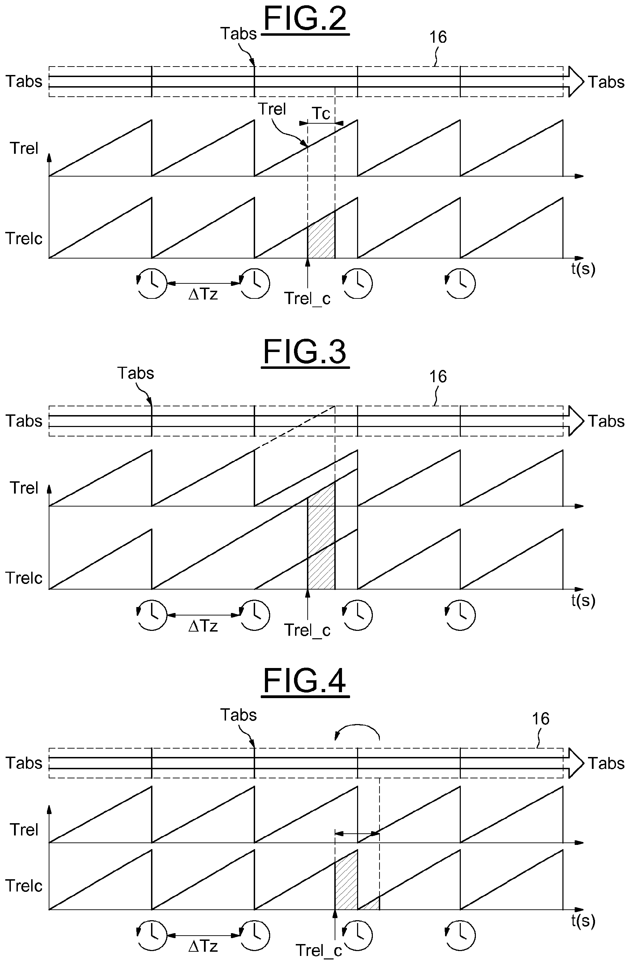

Si le temps relatif capteur Trel_c de l'horloge interne d'un capteur associé à l'événement détecté est inférieur au temps relatif de référence Trel de l'horloge interne de l'UCE 16, correspondant au cas illustré sur la figure 2, le module de calcul 24 calcule le temps absolu capteur Tabs_c en additionnant le temps relatif capteur Trel_c au temps de remise à zéro Tz mémorisé par un module de mémorisation 26 selon l'équation Eq.1.

Pour le cas où le temps relatif capteur Trel_c de l'horloge interne d'un capteur associé à l'événement détecté serait supérieur au temps relatif de référence Trel de l'horloge interne de l'UCE 16, deux cas doivent être discriminés, correspondant au cas illustré sur les figure 3 et 4, deux cas sont à considérer : le module de calcul 24 comprend un module 32 configuré pour comparer le temps relatif capteur Trel_c de l'horloge interne d'un capteur associé à un événement donné avec la période de remise à zéro $\Delta$Tz. Si le temps relatif capteur Trel_c est supérieur à la période de remise à zéro $\Delta$Tz, le module de calcul 24 calcule le temps absolu capteur Tabs_c en additionnant le temps relatif Trel_c modulo $\Delta$Tz au temps de remise à zéro Tz mémorisé (pour considérer la période précédente) par un module de mémorisation 26 selon l'équation suivante (illustré par la figure 3) :

$$\text{Tabs\_c} = (\text{Trel\_c modulo } \Delta\text{Tz} + \text{Tz}) - \text{Tc} \qquad \text{(Eq. 4)}$$

Cette opération peut être réalisée avec autant de reset non réalisés que permet la durée maximale transmissible par le CAN du temps relatif capteur.

Si le temps relatif capteur Trel_c est inférieur à la période de remise à zéro $\Delta$Tz, correspondant au cas illustré sur la figure 4, cela signifie que le changement de créneau a eu lieu pendant le temps de traitement Tc, le module de calcul 24 calcule le temps absolu capteur Tabs_c en additionnant le temps relatif Trel_c au temps de remise à zéro Tz-1 sur le créneau précédant mémorisé par le module de mémorisation 26 selon l'équation suivante :

$$Tabs\_c = (Trel\_c + Tz - 1) - Tc \qquad \text{(Eq. 5)}$$

On notera que le temps relatif peut être supérieur en cas de remise à zéro non réalisée (trame non reçue pour diverses raisons). Dans ce cas, le calcul modulo cette période de remise à zéro permet de continuer d'utiliser le dispositif. Cela reste possible tant que la date maximale transmissible de Trel c n'est pas dépassée.

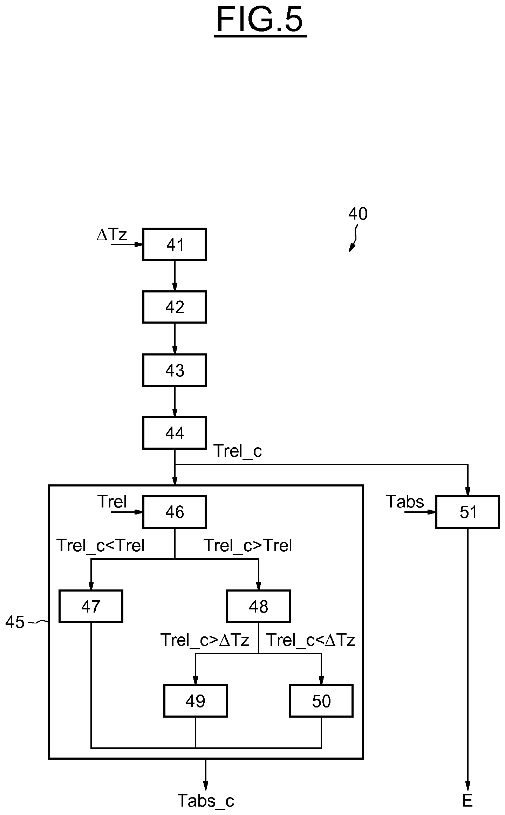

La figure 5 représente un organigramme d'un procédé 40 de datation d'un événement dans un véhicule automobile selon l'invention.

Lors d'une première étape 41, on remet à zéro, à chaque période $\Delta$Tz, l'ensemble des horloges internes relatives 14 des capteurs 12, via des trames de communication (non représentées) du réseau de communication 18. Par exemple, la période de remise à zéro $\Delta$Tz est inférieure à 10 secondes, par exemple comprise entre 50ms et 1 seconde, par exemple comprise entre 50ms et 500ms, par exemple égale à 100ms.

Ainsi, la remise à zéro de toutes les horloges relatives en utilisant des trames périodiques de communication déjà existantes sur le réseau de communication 18 permet de s'affranchir d'une charge de réseau supplémentaire et de réduire les pertes de temps liées à une préparation de trame de synchronisation absolue transmise qui doit ensuite être transmise puis décodée, comme c'est le cas dans l'art antérieur.

Selon la présente invention, la réception d'un signal de remise à zéro par des trames de communication réinitialise simplement le compteur local de chacune des horloges relatives.

Lors d'une deuxième étape 42, on mémorise le temps absolu de remise à zéro Tz de l'horloge absolue de l'unité de commande électronique 16 à chaque remise à zéro.

Ensuite, on détecte, à l'étape 43, un événement, c'est-à-dire tout signal détecté par un capteur, tel que par exemple, une caméra, un radar, un lidar, un sonar ou tout autre moyen capable de détecter un objet ou une cible, ou de donner tout autre type d'information datée.

On reçoit, à l'étape 44, à chaque événement détecté, un temps relatif Trel_c provenant de l'horloge relative 14 du capteur associée à l'événement détecté. Le temps relatif Trel_c est reçu par l'unité de commande électronique 16 après un temps de traitement Tc.

A l'étape 45, on calcule le temps absolu capteur Tabs_c en fonction du temps relatif Trel_c de l'horloge interne 14 d'un capteur 12 associé à l'événement détecté et du temps de remise à zéro Tz mémorisé par un module de mémorisation 26 dans l'unité de commande électronique 16 à chaque remise à zéro. Le temps absolu capteur Tabs_c s'écrit selon l'équation suivante :

$$Tabs\_c = (Trel\_c + Tz) - Tc \qquad \text{(Eq. 1)}$$

Avec,

Tabs_c, le temps absolu associé à un capteur pour un événement donné, exprimé, par exemple, en millisecondes ;

Trel_c, le temps relatif associé à l'horloge interne 14 d'un capteur pour un événement donné, exprimé, par exemple, en millisecondes ;

Tz, le temps absolu de remise à zéro mémorisé par le module de mémorisation 26 à chaque remise à zéro, exprimé, par exemple, en millisecondes ; et

Tc, le temps de calcul et/ou de traitement nécessaire pour transmettre le temps relatif au module de calcul 24, exprimé, par exemple, en millisecondes. Le temps de calcul Tc est, par exemple, sous la forme d'un temps prédéterminé à appliquer.

Lors de l'étape 45 de calcul du temps absolu capteur Tabs_c, on compare, à l'étape 46 le temps relatif Trel_c de l'horloge interne d'un capteur associé à l'événement détecté avec le temps relatif de référence Trel, dérivé du temps absolu Tabs de l'horloge interne de l'UCE 16.

Si le temps relatif Trel_c de l'horloge interne d'un capteur associé à un événement donné est inférieur au temps relatif de référence Trel de l'horloge interne de l'UCE 16, correspondant au cas illustré sur la figure 2, on calcule, à l'étape 47, le temps absolu capteur Tabs_c en additionnant le temps relatif Trel_c au temps de remise à zéro Tz mémorisé par un module de mémorisation 26 selon l'équation Eq.1.

Si le temps relatif Trel_c de l'horloge interne d'un capteur associé à un événement donné est supérieur au temps relatif de référence Trel de l'horloge interne de l'UCE 16, correspondant au cas illustré sur la figure 3, on compare, à l'étape 48, le temps relatif Trel_c de l'horloge interne d'un capteur associé à l'événement détecté avec la période de remise à zéro $\Delta Tz$.

Si le temps relatif Trel_c est supérieur à la période de remise à zéro $\Delta Tz$, on calcule, à l'étape 49, le temps absolu capteur Tabs_c en additionnant le temps relatif Trel_c modulo $\Delta Tz$ au temps de remise à zéro Tz mémorisé (pour considérer la période précédente) par un module de mémorisation 26 selon l'équation suivante :

$$\text{Tabs\_c} = (\text{Trel\_c modulo } \Delta Tz + Tz) - Tc \qquad (Eq.\ 4)$$

Si le temps relatif Trel_c est inférieur à la période de remise à zéro $\Delta Tz$, correspondant au cas illustré sur la figure 4, cela signifie que le changement de créneau a eu lieu pendant le temps de traitement Tc, on calcule, à l'étape 50, le temps absolu capteur Tabs_c en additionnant le temps relatif Trel_c au temps de remise à zéro Tz-1 sur le créneau précédant mémorisé par un module de mémorisation 26 selon l'équation suivante :

$$Tabs\_c = (Trel\_c + Tz - 1) - Tc \qquad (Eq.\ 5)$$

Tel qu'illustré sur la figure 5, le procédé comprend une étape 51 de vérification de la précision des temps relatifs des capteurs Trel_c afin d'estimer une erreur relative sur un créneau de mesure. A cet effet, on mémorise chaque temps relatif Trel_c avant la mise à zéro et comparer la différence $\Delta Trel\_c$ entre deux temps relatifs Trel_c1 et Trel_c2 entre deux remises à zéro successives, on compare ladite différence $\Delta Trel\_c$ avec une différence de temps absolu $\Delta Tabs$ de l'horloge interne de l'UCE 16 entre deux temps absolu Tabs1 et Tabs2 entre deux remises à zéro successives correspondant respectivement aux deux temps relatifs Trel_c1 et Trel_c2 :

$$\Delta Trel\_c = Trel\_c1 - Trel\_c2 \qquad (Eq.\ 2)$$

$$\Delta Tabs = Tabs1 - Tabs2 \qquad (Eq.\ 3)$$

Enfin, on calcule une erreur relative E correspondant à la différence entre $\Delta Trel\_c$ et $\Delta Tabs$ et peut ainsi corriger le temps relatif Trel_c pour les événements reçus, estimer un degré de fiabilité ou encore corriger le temps de traitement Tc forfaitaire.

Grace à l'invention, l'horloge absolue est indépendante de l'horloge des capteurs permettant au système d'établir des diagnostics de dysfonctionnements de l'horloge des capteurs sans pour autant en être affecté. Le système est ainsi tolérant à la panne.

L'horloge absolue permet de réguler les horloges relatives des capteurs via des remises à zéro régulières pour éviter les dérives.

De plus, l'invention ne nécessite pas de charge de réseau supplémentaire puisqu'elle utilise le réseau et les communications déjà existants sur les calculateurs des véhicules automobiles.

**Revendications**

1. Système de datation d'un événement se produisant dans un véhicule automobile, comprenant une pluralité de capteurs (12) comprenant chacun une horloge interne relative (14), et une unité électronique de commande ECU (16) comprenant une horloge interne absolue et configurée pour communiquer avec chacun des capteurs (12) via un réseau de communication (18), l'unité électronique de commande (16) comprenant aussi:

   - un module (20) de traitement des données configuré pour recevoir en entrée, à chaque événement détecté par un capteur, un temps relatif capteur (Trel_c) provenant de l'horloge relative (14) du capteur (12) associé à l'événement détecté ;
   - un module (22) de remise à zéro configuré pour transmettre, à chaque période ($\Delta$Tz), un signal de remise à zéro de l'ensemble des horloges internes relatives (14), via des trames de communication déjà existantes du

   réseau de communication (18) ; et

   - un module de calcul (24) configuré pour calculer un temps absolu capteur (Tabs_c) en fonction du temps relatif (Trel_c) reçu par le module (20) de traitement et d'un temps de remise à zéro (Tz) mémorisé par un module de mémorisation (26) dans l'unité de commande électronique (16) à chaque remise à zéro, définissant un temps relatif de référence (Trel).

2. Système selon la revendication 1, dans lequel le module de calcul (24) du temps absolu capteur (Tabs_c) comprend un module (30) configuré pour comparer le temps relatif (Trel_c) de l'horloge interne d'un capteur associé à l'événement détecté avec le temps relatif de référence (Trel) de l'horloge interne de l'unité de commande électronique (16).

3. Système selon la revendication 2, dans lequel lorsque le temps relatif capteur (Trel_c) est inférieur au temps relatif de référence (Trel), le module de calcul (24) est configuré pour calculer le temps absolu capteur (Tabs_c) en additionnant le temps relatif capteur (Trel_c) au temps de remise à zéro (Tz) mémorisé par le module de mémorisation (26) moins un temps de traitement prédéterminé (Tc).

4. Système selon la revendication 2 ou 3, dans lequel lorsque le temps relatif capteur (Trel_c) est supérieur au temps relatif de référence (Trel), le module de calcul (24) comprend un module de comparaison (32) configuré pour comparer ledit temps relatif capteur (Trel_c) avec la période de remise à zéro ($\Delta$Tz), lorsque le temps relatif capteur (Trel_c) est supérieur à la période de remise à zéro ($\Delta$Tz), le module de calcul (24) est configuré pour calculer le temps absolu capteur (Tabs_c) en additionnant le temps relatif capteur (Trel_c) modulo la période de remise à zéro ($\Delta$Tz) au temps de remise à zéro (Tz) ; et lorsque le temps relatif capteur (Trel_c) est inférieur à la période de remise à zéro ($\Delta$Tz), le module de calcul (24) est configuré pour calculer le temps absolu capteur (Tabs_c) en additionnant le temps relatif capteur (Trel_c) au temps de remise à zéro (Tz-1) sur le créneau précédant mémorisé par le module de mémorisation (26).

5. Système selon l'une quelconque des revendications précédentes, dans lequel la période de remise à zéro ($\Delta$Tz) est comprise entre 50ms et 500ms, par exemple égale à 100ms.

6. Système selon l'une quelconque des revendications précédentes, dans lequel l'unité électronique de commande (16) comprend un module (28) de vérification de la précision des temps relatifs des capteurs (Trel_c) configuré pour déterminer une erreur relative des temps relatifs des capteurs (Trel_c), ledit module (28) de vérification étant configuré pour mémoriser chaque temps relatif capteur (Trel_c) avant la mise à zéro, calculer la différence ($\Delta$Trel_c) entre deux temps relatifs capteurs (Trel_c1, Trel_c2) entre deux remises à zéro successives, comparer ladite différence ($\Delta$Trel_c) avec une différence de temps absolu ($\Delta$Tabs) de l'horloge interne de l'unité de commande électronique (16) entre deux temps absolu (Tabs1, Tabs2) entre deux remises à zéro successives correspondant respectivement aux deux temps relatifs capteur (Trel_c1, Trel_c2), et pour calculer une erreur relative (E) correspondant à la différence entre la différence ($\Delta$Trel_c) entre deux temps relatifs capteurs et la différence de temps absolu ($\Delta$Tabs).

7. Procédé de datation d'un événement détecté dans un véhicule automobile comprenant une pluralité de capteurs (12) comprenant chacun une horloge interne relative (14), et une unité électronique de commande (16) comprenant une horloge interne absolue et configurée pour communiquer avec chacun des capteurs (12) via un réseau de communication (18), l'unité électronique de commande exécutant les étapes suivant :

- on remet à zéro, à chaque période (ΔTz), l'ensemble des horloges internes relatives (14) des capteurs (12), via des trames de communication déjà existantes du réseau de communication (18) ;
- on mémorise le temps absolu de remise à zéro (Tz) de l'horloge absolue de l'unité de commande électronique (16) à chaque remise à zéro ;
- on détecte un événement ;
- on reçoit, à chaque événement détecté, un temps relatif capteur (Trel_c) provenant de l'horloge relative (14) du capteur associée à l'événement détecté ; et
- on calcule un temps absolu capteur (Tabs_c) en fonction du temps relatif capteur (Trel_c) de l'horloge interne (14) d'un capteur (12) associé à l'événement détecté et du temps de remise à zéro (Tz) mémorisé par un module de mémorisation (26) dans l'unité de commande électronique (16) à chaque remise à zéro, définissant un temps relatif de référence (Trel).

8. Procédé selon la revendication 7, dans lequel lors du calcul du temps absolu capteur (Tabs_c), on compare le temps relatif capteur (Trel_c) de l'horloge interne d'un capteur associé à l'événement détecté avec le temps relatif de référence (Trel) de l'horloge interne de l'unité de commande électronique (16).

9. Procédé selon la revendication 8, dans lequel lorsque le temps relatif capteur (Trel_c) est inférieur au temps relatif de référence (Trel), on calcule le temps absolu capteur (Tabs_c) en additionnant le temps relatif capteur (Trel_c) au temps de remise à zéro (Tz) mémorisé par le module de mémorisation (26) moins un temps de traitement prédéterminé (Tc).

10. Procédé selon la revendication 8 ou 9, dans lequel lorsque le temps relatif capteur (Trel_c) est supérieur au temps relatif de référence (Trel), on compare ledit temps relatif capteur (Trel_c) avec la période de remise à zéro (ΔTz), lorsque le temps relatif capteur (Trel_c) est supérieur à la période de remise à zéro (ΔTz), on calcule le temps absolu capteur (Tabs_c) en additionnant le temps relatif capteur (Trel_c) modulo la période de remise à zéro (ΔTz) au temps de remise à zéro (Tz) ; et lorsque le temps relatif capteur (Trel_c) est inférieur à la période de remise à zéro (ΔTz), on calcule le temps absolu capteur (Tabs_c) en additionnant le temps relatif capteur (Trel_c) au temps de remise à zéro (Tz-1) sur le créneau précédant mémorisé par le module de mémorisation (26).

11. Procédé selon l'une quelconque des revendications 7-10, dans lequel pour vérifier la précision des temps relatifs des capteurs (Trel_c), on mémorise chaque temps relatif capteur (Trel_c) avant la mise à zéro, on calculer la différence (ΔTrel_c) entre deux temps relatifs capteurs (Trel_c1, Trel_c2) entre deux remises à zéro successives, on compare ladite différence (ΔTrel_c) avec une différence de temps absolu (ΔTabs) de l'horloge interne de l'unité de commande électronique (16) entre deux temps absolu (Tabs1, Tabs2) entre deux remises à zéro successives correspondant respectivement aux deux temps relatifs capteur (Trel_c1, Trel_c2), et on calcule une erreur relative (E) correspondant à la différence entre la différence (ΔTrel_c) entre deux temps relatifs capteurs et la différence de temps absolu (ΔTabs).

**Patentansprüche**

1. System zur Datierung eines in einem Kraftfahrzeug eintretenden Ereignisses, das eine Vielzahl von Sensoren (12), die je einen internen Relativzeitgeber (14) enthalten, und eine elektronische Steuereinheit ECU (16) enthält, die einen internen Absolutzeitgeber enthält und konfiguriert ist, mit jedem der Sensoren (12) über ein Kommunikationsnetz (18) zu kommunizieren, wobei die elektronische Steuereinheit (16) auch enthält:

- ein Datenverarbeitungsmodul (20), das konfiguriert ist, am Eingang bei jedem von einem Sensor erfassten Ereignis eine Sensor-Relativzeit (Trel_c) zu empfangen, die vom Relativzeitgeber (14) des dem erfassten Ereignis zugeordneten Sensors (12) kommt;
- ein Nullrückstellungsmodul (22), das konfiguriert ist, bei jeder Periode (ΔTz) ein Nullrückstellungssignal der Gesamtheit der internen Relativzeitgeber (14) über bereits existierende Kommunikationsrahmen des Kommunikationsnetzes (18) zu übertragen; und
- ein Rechenmodul (24), das konfiguriert ist, eine Sensor-Absolutzeit (Tabs_c) abhängig von der vom Verarbeitungsmodul (20) empfangenen Relativzeit (Trel_c) und von einer von einem Speichermodul (26) in der elektronischen Steuereinheit (16) bei jeder Nullrückstellung gespeicherten Nullrückstellungszeit (Tz) zu berechnen, die eine Bezugs-Relativzeit (Trel) definiert.

**2.** System nach Anspruch 1, wobei das Rechenmodul (24) der Sensor-Absolutzeit (Tabs_c) ein Modul (30) enthält, das konfiguriert ist, die Relativzeit (Trel_c) des internen Zeitgebers eines dem erfassten Ereignis zugeordneten Sensors mit der Bezugs-Relativzeit (Trel) des internen Zeitgebers der elektronischen Steuereinheit (16) zu vergleichen.

**3.** System nach Anspruch 2, wobei, wenn die Sensor-Relativzeit (Trel_c) kürzer ist als die Bezugs-Relativzeit (Trel), das Rechenmodul (24) konfiguriert ist, die Sensor-Absolutzeit (Tabs_c) durch Addieren der Sensor-Relativzeit (Trel_c) zur vom Speichermodul (26) gespeicherten Nullrückstellungszeit (Tz) minus eine vorbestimmte Verarbeitungszeit (Tc) zu berechnen.

**4.** System nach Anspruch 2 oder 3, wobei, wenn die Sensor-Relativzeit (Trel_c) länger ist als die Bezugs-Relativzeit (Trel), das Rechenmodul (24) ein Vergleichsmodul (32) enthält, das konfiguriert ist, die Sensor-Relativzeit (Trel_c) mit der Nullrückstellungsperiode (ΔTz) zu vergleichen; wenn die Sensor-Relativzeit (Trel_c) länger ist als die Nullrückstellungsperiode (ΔTz), das Rechenmodul (24) konfiguriert ist, die Sensor-Absolutzeit (Tabs_c) durch Addieren der Sensor-Relativzeit (Trel_c) Modulo die Nullrückstellungsperiode (ΔTz) zur Nullrückstellungszeit (Tz) zu berechnen; und wenn die Sensor-Relativzeit (Trel_c) kürzer ist als die Nullrückstellungsperiode (ΔTz), das Rechenmodul (24) konfiguriert ist, die Sensor-Absolutzeit (Tabs_c) durch Addieren der Sensor-Relativzeit (Trel_c) zur Nullrückstellungszeit (Tz-1) im vom Speichermodul (26) gespeicherten vorhergehenden Zeitfenster zu berechnen.

**5.** System nach einem der vorhergehenden Ansprüche, wobei die Nullrückstellungsperiode (ΔTz) zwischen 50ms und 500ms liegt, zum Beispiel gleich 100ms ist.

**6.** System nach einem der vorhergehenden Ansprüche, wobei die elektronische Steuereinheit (16) ein Modul (28) zur Überprüfung der Präzision der Relativzeiten der Sensoren (Trel_c) enthält, das konfiguriert ist, einen relativen Fehler der Relativzeiten der Sensoren (Trel_c) zu bestimmen, wobei das Überprüfungsmodul (28) konfiguriert ist, jede Sensor-Relativzeit (Trel_c) vor der Nullstellung zu speichern, die Differenz (ΔTrel_c) zwischen zwei Sensor-Relativzeiten (Trel_c1, Trel_c2) zwischen zwei aufeinanderfolgenden Nullrückstellungen zu berechnen, die Differenz (ΔTrel_c) mit einer Absolutzeitdifferenz (ΔTabs) des internen Zeitgebers der elektronischen Steuereinheit (16) zwischen zwei Absolutzeiten (Tabs1, Tabs2) zwischen zwei aufeinanderfolgenden Nullrückstellungen zu vergleichen, die je den zwei Sensor-Relativzeiten (Trel_c1, Trel_c2) entsprechen, und einen relativen Fehler (E) entsprechend der Differenz zwischen der Differenz (ΔTrel_c) zwischen zwei Sensor-Relativzeiten und der Absolutzeitdifferenz (ΔTabs) zu berechnen.

**7.** Verfahren zur Datierung eines in einem Kraftfahrzeug erfassten Ereignisses, das eine Vielzahl von Sensoren (12), die je einen internen Relativzeitgeber (14) enthalten, und eine elektronische Steuereinheit (16) enthält, die einen internen Absolutzeitgeber enthält und konfiguriert ist, mit jedem der Sensoren (12) über ein Kommunikationsnetz (18) zu kommunizieren, wobei die elektronische Steuereinheit die folgenden Schritte ausführt:

- Nullrückstellung in jeder Periode (ΔTz) der Gesamtheit der internen Relativzeitgeber (14) der Sensoren (12) über bereits existierende Kommunikationsrahmen des Kommunikationsnetzes (18);
- Speichern der Nullrückstellungs-Absolutzeit (Tz) des Absolutzeitgebers der elektronischen Steuereinheit (16) bei jeder Nullrückstellung;
- Erfassung eines Ereignisses;
- Empfang, bei jedem erfassten Ereignis, einer Sensor-Relativzeit (Trel_c), die vom Relativzeitgeber (14) des dem erfassten Ereignis zugeordneten Sensors kommt; und
- Berechnen einer Sensor-Absolutzeit (Tabs_c) abhängig von der Sensor-Relativzeit (Trel_c) des internen Zeitgebers (14) eines dem erfassten Ereignis zugeordneten Sensors (12) und der von einem Speichermodul (26) in der elektronischen Steuereinheit (16) bei jeder Nullrückstellung gespeicherten Nullrückstellungszeit (Tz), die eine Bezugs-Relativzeit (Trel) definiert.

**8.** Verfahren nach Anspruch 7, wobei bei der Berechnung der Sensor-Absolutzeit (Tabs_c) die Sensor-Relativzeit (Trel_c) des internen Zeitgebers eines dem erfassten Ereignis zugeordneten Sensors mit der Bezugs-Relativzeit (Trel) des internen Zeitgebers der elektronischen Steuereinheit (16) verglichen wird.

**9.** Verfahren nach Anspruch 8, wobei, wenn die Sensor-Relativzeit (Trel_c) kürzer ist als die Bezugs-Relativzeit (Trel), die Sensor-Absolutzeit (Tabs_c) durch Addieren der Sensor-Relativzeit (Trel_c) zur vom Speichermodul (26) gespeicherten Nullrückstellungszeit (Tz) minus eine vorbestimmte Verarbeitungszeit (Tc) berechnet wird.

10. Verfahren nach Anspruch 8 oder 9, wobei, wenn die Sensor-Relativzeit (Trel_c) länger ist als die Bezugs-Relativzeit (Trel), die Sensor-Relativzeit (Trel_c) mit der Nullrückstellungsperiode (ΔTz) verglichen wird; wenn die Sensor-Relativzeit (Trel_c) länger ist als die Nullrückstellungsperiode (ΔTz), die Sensor-Absolutzeit (Tabs_c) durch Addieren der Sensor-Relativzeit (Trel_c) Modulo die Nullrückstellungsperiode (ΔTz) zur Nullrückstellungszeit (Tz) berechnet wird; und wenn die Sensor-Relativzeit (Trel_c) kürzer ist als die Nullrückstellungsperiode (ΔTz), die Sensor-Absolutzeit (Tabs_c) durch Addieren der Sensor-Relativzeit (Trel _c) zur Nullrückstellungszeit (Tz-1) im vom Speichermodul (26) gespeicherten vorhergehenden Zeitfenster berechnet wird.

11. Verfahren nach einem der Ansprüche 7-10, wobei zur Überprüfung der Präzision der Relativzeiten der Sensoren (Trel_c) jede Sensor-Relativzeit (Trel_c) vor der Nullstellung gespeichert wird, die Differenz (ΔTrel_c) zwischen zwei Sensor-Relativzeiten (Trel_c1, Trel_c2) zwischen zwei aufeinanderfolgenden Nullrückstellungen berechnet wird, die Differenz (ΔTrel_c) mit einer Absolutzeitdifferenz (ΔTabs) des internen Zeitgebers der elektronischen Steuereinheit (16) zwischen zwei Absolutzeiten (Tabs1, Tabs2) zwischen zwei aufeinanderfolgenden Nullrückstellungen verglichen wird, die je den zwei Sensor-Relativzeiten (Trel_c1, Trel c2) entsprechen, und ein relativer Fehler (E) entsprechend der Differenz zwischen der Differenz (ΔTrel_c) zwischen zwei Sensor-Relativzeiten und der Absolutzeitdifferenz (ΔTabs) berechnet wird.

**Claims**

1. System for date-stamping an event occurring in an automotive vehicle, comprising a plurality of sensors (12) each comprising a relative internal clock (14), and an electronic control unit ECU (16) comprising an absolute internal clock and configured for communicating with each of the sensors (12) via a communication network (18), the electronic control unit (16) also comprising:

   - a data processing module (20) configured for receiving at its input, at each event detected by a sensor, a sensor relative time (Trel_c) originating from the relative clock (14) of the sensor (12) associated with the detected event;
   - a zero reset module (22) configured for transmitting, at each period (ΔTz), a zero reset signal for all the relative internal clocks (14), via already existing communication frames of the communication network (18); and
   - a calculation module (24) configured for calculating a sensor absolute time (Tabs_c) as a function of the relative time (Trel_c) received by the processing module (20) and of a zero reset time (Tz) stored by a storage module (26) in the electronic control unit (16) at each zero reset, defining a reference relative time (Trel).

2. System according to Claim 1, wherein the module (24) for calculating the sensor absolute time (Tabs_c) comprises a module (30) configured for comparing the relative time (Trel_c) of the internal clock of a sensor associated with the detected event with the reference relative time (Trel) of the internal clock of the electronic control unit (16).

3. System according to Claim 2, wherein, when the sensor relative time (Trel_c) is less than the reference relative time (Trel), the calculation module (24) is configured for calculating the sensor absolute time (Tabs_c) by adding the sensor relative time (Trel_c) to the zero reset time (Tz) stored by the storage module (26), minus a predetermined processing time (Tc).

4. System according to Claim 2 or 3, wherein, when the sensor relative time (Trel_c) is greater than the reference relative time (Trel), the calculation module (24) comprises a comparison module (32) configured for comparing said sensor relative time (Trel_c) with the zero reset period (ΔTz), when the sensor relative time (Trel_c) is greater than the zero reset period (ΔTz), the calculation module (24) is configured for calculating the sensor absolute time (Tabs_c) by adding the sensor relative time (Trel_c) modulo the zero reset period (ΔTz) to the zero reset time (Tz); and when the sensor relative time (Trel_c) is less than the zero reset period (ΔTz), the calculation module (24) is configured for calculating the sensor absolute time (Tabs_c) by adding the sensor relative time (Trel_c) to the zero reset time (Tz-1) for the preceding time slot stored by the storage module (26) .

5. System according to any of the preceding claims, wherein the zero reset period (ΔTz) is between 50 ms and 500 ms, for example equal to 100 ms.

6. System according to any of the preceding claims, wherein the electronic control unit (16) comprises a module (28) for verifying the precision of the relative times of the sensors (Trel_c), configured for determining a relative error of the relative times of the sensors (Trel_c), said verification module (28) being configured for storing each sensor relative time (Trel_c) before the zero reset, calculating the difference (ΔTrel_c)between two sensor relative times (Trel_c1, Trel_c2) between two successive zero resets, comparing said difference (ΔTrel_c) with an absolute time difference (ΔTabs) of the internal clock of the electronic control unit (16) between two absolute times (Tabs1, Tabs2) between two successive zero resets corresponding, respectively, to the two sensor relative times (Trel_c1, Trel_c2), and for calculating a relative error (E) corresponding to the difference between the difference (ΔTrel_c) between two sensor relative times and the absolute time difference (ΔTabs).

7.  Method for date-stamping an event detected in an automotive vehicle comprising a plurality of sensors (12) each comprising a relative internal clock (14), and an electronic control unit (16) comprising an absolute internal clock and configured for communicating with each of the sensors (12) via a communication network (18), the electronic control unit executing the following steps:

- all the relative internal clocks (14) of the sensors (12) are reset to zero at each period (ΔTz), via already existing communication frames of the communication network 18;
- the absolute zero reset time (Tz) of the absolute clock of the electronic control unit (16) is stored at each zero reset;
- an event is detected;
- when each event is detected, a sensor relative time (Trel_c), originating from the relative clock (14) of the sensor associated with the detected event, is received; and
- a sensor absolute time (Tabs_c) is calculated as a function of the sensor relative time (Trel_c) of the internal clock (14) of a sensor (12) associated with the detected event and of the zero reset time (Tz) stored by a storage module (26) in the electronic control unit (16) at each zero reset, defining a reference relative time (Trel).

8.  Method according to Claim 7, wherein, during the calculation of the sensor absolute time (Tabs_c), the sensor relative time (Trel_c) of the internal clock of a sensor associated with the detected event is compared with the reference relative time (Trel) of the internal clock of the electronic control unit (16).

9.  Method according to Claim 8, wherein, when the sensor relative time (Trel_c) is less than the reference relative time (Trel), the sensor absolute time (Tabs_c) is calculated by adding the sensor relative time (Trel_c) to the zero reset time (Tz) stored by the storage module (26), minus a predetermined processing time (Tc).

10. Method according to Claim 8 or 9, wherein, when the sensor relative time (Trel_c) is greater than the reference relative time (Trel), said sensor relative time (Trel_c) is compared with the zero reset period (ΔTz); when the sensor relative time (Trel_c) is greater than the zero reset period (ΔTz), the sensor absolute time (Tabs_c) is calculated by adding the sensor relative time (Trel_c) modulo the zero reset period (ΔTz) to the zero reset time (Tz); and when the sensor relative time (Trel_c) is less than the zero reset period (ΔTz), the sensor absolute time (Tabs_c) is calculated by adding the sensor relative time (Trel_c) to the zero reset time (Tz-1) for the preceding time slot stored by the storage module (26).

11. Method according to any of Claims 7-10, wherein, in order to verify the precision of the relative times of the sensors (Trel_c), each sensor relative time (Trel_c) is stored before the zero reset, the difference (ΔTrel_c) between two sensor relative times (Trel_c1, Trel_c2) between two successive zero resets is calculated, said difference (ΔTrel_c)is compared with an absolute time difference (ΔTabs) of the internal clock of the electronic control unit (16) between two absolute times (Tabs1, Tabs2) between two successive zero resets corresponding, respectively, to the two sensor relative times (Trel_c1,Trel_c2), and a relative error (E) is calculated, corresponding to the difference between the difference (ΔTrel_c) between two sensor relative times and the absolute time difference (ΔTabs).

FIG.1

10

UCE 16

Trel

28    ΔTrel_c-ΔTabs

24

12 — 14

12 — 14

12 — 14

18

20    Trel_c

Trel

Trel_c    30    Trel_c<Trel

Trel_c>Trel

Tabs

22    26    Tz    32    Trel_c>ΔTz

Trel_c<ΔTz

ΔTz

Tabs_c

EP 3 711 203 B1

## FIG.2

## FIG.3

## FIG.4

# FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005107174 A1
- DE 102015212218 A1

- US 9756590 A1